# EUROPÄISCHE PATENTSCHRIFT

(11) **EP 2 315 860 B1**
(45) Veröffentlichungstag und Bekanntmachung des Hinweises auf die Patenterteilung: **19.03.2014**
(21) Anmeldenummer: 09768816.2
(22) Anmeldetag: 08.05.2009
(51) Int. Cl.: C21C 5/50, F16F 15/04, F16H 57/025

(54) **DREHMOMENTABSTÜTZUNG FÜR EINEN KONVERTERKIPPANTRIEB**
TORQUE SUPPORT FOR A CONVERTER TILTING DRIVE
SUPPORT DE COUPLE DESTINÉ À UN ENTRAÎNEMENT PAR BASCULEMENT D'UN CONVERTISSEUR

(30) Priorität: 25.06.2008 DE 102008030192
(43) Veröffentlichungstag der Anmeldung: 04.05.2011
(73) Patentinhaber: SMS Siemag Aktiengesellschaft, 40237 Düsseldorf (DE)
(72) Erfinder: HERTEL, Jörg, 57271 Hilchenbach (DE); WALLMEROTH, Benjamin, 57518 Betzdorf (DE); ROSE, Lutz, 47259 Duisburg (DE); SUNDERMANN, Christoph, 57271 Hilchenbach (DE); SCHULZE, Stephan, 40668 Meerbusch (DE); IMIELA, Christian, 40227 Düsseldorf (DE); IGELHORST, Wolfgang, 45478 Mülheim a.d. Ruhr (DE); THIEDEMANN, Uwe, 47804 Krefeld (DE)
(74) Vertreter: Klüppel, Walter
(86) Internationale Anmeldenummer: PCT/DE2009/000664
(87) Internationale Veröffentlichungsnummer: WO 2009/155892

(56) Entgegenhaltungen:
- EP-A- 0 003 108
- DE-A1- 2 201 296
- DE-A1- 3 827 329
- JP-A- 53 031 070
- SU-A- 403 745

## Beschreibung

Die Erfindung betrifft eine Drehmomentabstützung für einen auf einem Wellenzapfen reitenden Konverterkippantrieb, wobei an dem den anzutreibenden Wellenzapfen aufnehmenden Getriebegehäuse Stützen zur Abstützung auf der den Konverter tragenden Struktur vorgesehen sind, die Stützen jeweils für sich an der Struktur gelenkig verankert sind und jeweils als doppeltwirkende hydraulische Kolben-Zylinder-Einheiten ausgebildet sind.

Eine derartige Drehmomentabstützung ist aus der SU 403 745A bekannt.

Aus der JP 53 031070 A ist ein Dämpfungssystem für einen Konverterantrieb bekannt, mit doppelt wirkenden hydraulischen Kolben-Zylinder-Einheiten, bei denen diese mittels Druckleitungen miteinander verbunden und gemeinsam im Gleichlauf ansteuerbar sind.

Aus der DE 38 27 329 A1 ist eine Drehmomentabstützung für auf Wellenzapfen reitende Antriebe, insbesondere für Konverterkippantriebe, auf deren anzutreibendem Wellenzapfen das Getriebegehäuse gelagert ist, bekannt.

Hierbei sind symmetrisch zur Drehachse des Wellenzapfens am Getriebegehäuse Lenkerstangen angebracht, die bodenseitig mit Gelenklagern in Verbindung stehen, die ihrerseits über einen Torsionsstab miteinander verbunden sind.

Die Lenkerstangen bestehen jeweils aus zwei Teilen, zwischen denen Federelemente angeordnet sind, die durch mechanische Mittel vorspannbar sind.

Die Torsionswelle bietet Querkraftfreiheit (Querkraft= Biegekraft aufgrund Momenteinleitung), ist aber für hohe Dynamik aus dem Blasprozeß nicht geeignet, da größere Schwenkwinkel gemeinsam mit hohen Kräften in allen vier Drehpunkten unten an der Welle für Reibverschleiß und Mikrokorrosion sorgen.

Die Torsionswelle ist nicht regelbar und es ist keine aktive Einflußnahme möglich.

Bei einer anderen Drehmomentabstützung (EP 0003 108A1) sind beiderseits der Konverterachse zur elastischen Abstützung mit Druckgas beaufschlagbare - einfach wirkehde - Kolbenzylinder vorgesehen.

Diese Abstützung ist allerdings nicht querkraftfrei, denn bei einer Drehmomenteinleitung über die Konverterzapfenachse kann hier nur einer der Zylinder belastet werden, während der gegenüberliegende Zylinder entlastet wird.

Dadurch entsteht zwangsläufig eine Biegekraft auf den Konverterzapfen, d. h. die Achse des Getriebe tragenden Konverterzapfens wird gebogen mit der einseitigen Zylinderkraft mal dem Abstand des Zylinders von der Konverterachse.

Aufgabe der Erfindung ist es, eine verbesserte Drehmomentabstützung für einen Konverterkippantrieb zu schaffen.

Gelöst wird diese Aufgabe erfindungsgemäß mit einer Drehmomentabstützung für einen auf einem Wellenzapfen reitenden Konverterkippantrieb, wobei an dem den anzutreibenden Wellenzapfen aufnehmenden Getriebegehäuse Stützen zur Abstützung auf der den Konverter tragenden Struktur vorgesehen sind,
die Stützen jeweils für sich an der Struktur gelenkig verankert sind und jeweils als doppeltwirkende hydraulische Kolben-Zylinder-Einheiten ausgebildet sind, dadurch, dass mindestens eine der Kolben-Zylinder-Eiinheiten freischaltbar ist; um der Konverterbewegung kraftlos zu folgen.

Bei dieser erfindungsgemäßen Momentabstützung sind - im Gegensatz zum vorher erwähnten Stand der Technik - die Zylinder doppeltwirkend. Sie setzen der Momenteinleitung durch den Konverter, beidseitig der Konverterachse entgegengesetzt gleich große Kräfte entgegen, die sich gegeneinander aufheben, so dass keine Biegekräfte am Zapfen durch die Drehmomenteinleitung erzeugt werden.

Die Abstützung stellt somit eine Verbindung zwischen Kippantrieb und Stützstruktur dar, die jede Bewegung des Antriebes gestattet, außer die Drehung des Antriebes um die Konverterzapfenachse, während des Blasprozesses, und zwar auch ohne Biegekräfte am Zapfen, nur Drehmomente in den Zapfen einleitend.

Da die aus dem Blasprozeß resultierenden Drehmomente am Zapfen ein Vielfaches der Rückstellmomente beim Kippen des Konverters betragen können, ist es sinnvoll beim Blasen Biegekraftlosigkeit aus Drehmomenteinleitung zu garantieren.

Beim Kippen, mit kleineren Kräften und ohne die Dynamik des Prozesses, erträgt der Zapfen problemlos auch Biegekräfte aus Momenteinleitung.

Der Einsatz von doppeltwirkenden hydraulischen Kolben-Zylinder-Einheiten ergibt viele Vorteile. So können sie zur aktiven oder passiven Schwingungsdämpfung beim Blasen des Konverters ansteuerbar sein.

Sie können getrennt und unterschiedlich ansteuerbar sein, so dass beispielsweise beim Kippen diese einseitig starr oder eben beim Blasen beidseitig starr und damit querkraftfrei geschaltet sind.

Der Verlagerung der Konverterzapfenachse beim Kippen (wegen unterschiedlicher Beladungszustände und/oder Verformung durch thermische und/oder mechanische Einflüsse) wird dieses neue System gerecht, indem einer der zwei Zylinder freigeschaltet wird. So entsteht beim Kippen Querkraft, aufgrund des Rückstellmomentes des Konverters und dem Hebel zum blockierten Zylinder, nicht jedoch Zwang zwischen Antrieb und Fundament. Der Antrieb neigt sich beim Kippen über seine sich bewegende Achse, mit dem blockierten Zylinder als feste Stütze, in den freigeschalteten Zylinder.

Zusammengefasst ergibt sich somit, dass :
1. Die Zylinder Druck- und Zugkräfte übertragen können, die beidseitig entgegengesetzt gleich groß sind (Bedingung f. Biegekraftfreiheit), wenn die Zylinder hydraulisch blockiert sind oder angesteuert ihre Position halten.
2. Die Federwirkung des Systems mittels Steuerung an unterschiedliche Betriebszustände angepaßt werden kann.
3. Da die Zylinder gelenkig angebunden sind und so die notwendigen Freiheitsgrade in jeglicher anderer Richtung als der Zylinderachse gewähren, mit der Folge, dass die Gelenklager nur vernachlässigbar geringe Winkel bei Lasteinleitung erfahren und keinem Reibverschleiß unterliegen.
4. Geringe statische Lageabweichung der Getriebe/Zapfenachse beim Blasen durch innere Leckagen der Zylinder oder entsprechende Zylindersteuerung ausgeglichen werden, wodurch Querkraftfreiheit über die Blaszeit erhalten bleibt.
5. System die Möglichkeit bietet, das Eigengewicht des Antriebes ganz oder teilweise zu kompensieren, auch überzukompensieren, um Zapfen und Tragringlagerung weiter zu entlasten oder gezielt zu belasten, ohne Querkräfte aus dem Prozeß.
6. Über gezielte Zylindersteuerung ein aktives Bedämpfen der aus dem Blasprozess resultierenden Schwingungen möglich ist, ohne Querkräfte aus dem Prozeß.
7. Stellung des Blasgefäßes beim Blasen zur Optimierung des Prozesses durch Verfahren der Zylinder variiert werden kann, ohne Querkräfte aus dem Prozeß.

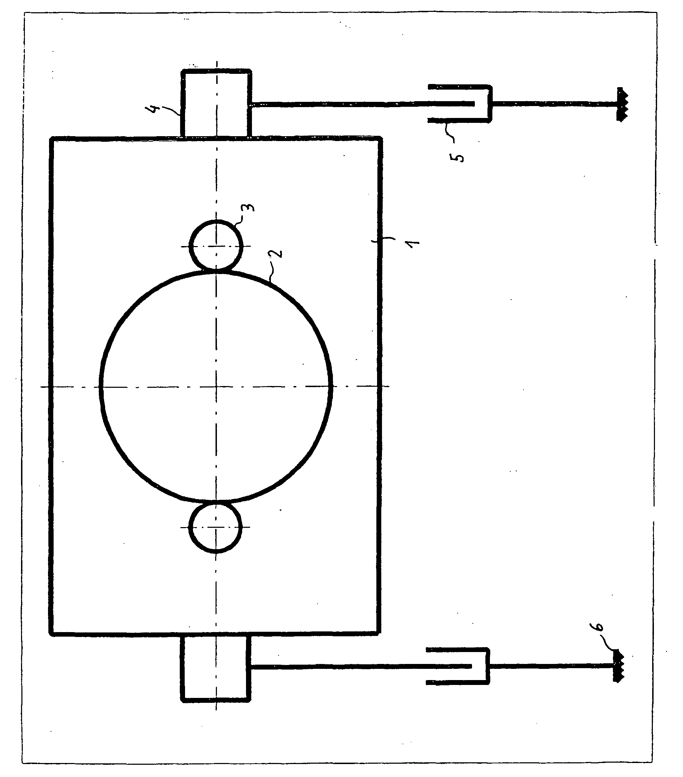

Schematisch ist in der Zeichnung ein Ausführungsbeispiel dargestellt, und zwar ohne den Konverter selbst.

Mit 1 ist das Getriebegehäuse bezeichnet, das reitend auf dem hier nicht zu sehenden Wellenzapfen des Konverters angeordnet ist.

Mit 2 und 3 sind der Konverterkippantrieb angedeutet.

Seitlich des Wellenzapfens sind am Getriebegehäuse 1 Laschen 4 oder dgl. vorgesehen, mit deren Hilfe das Getriebegehäuse 1 sich über die Kolben-Zylinder-Einheiten 5 auf der Stützstruktur 6 abstützt.

## Patentansprüche

1. Drehmomentabstützung für einen auf einem Wellenzapfen reitenden Konverterkippantrieb, wobei an dem den anzutreibenden Wellenzapfen aufnehmenden Getriebegehäuse (1) Stützen zur Abstützung auf der den Konverter tragenden Struktur (6) vorgesehen sind,
die Stützen jeweils für sich an der Struktur (6) gelenkig verankert sind und jeweils als doppeltwirkende hydraulische Kolben-Zylinder-Einheiten (5) ausgebildet sind, **dadurch gekennzeichnet,**
**dass** mindestens eine der Kolben-Zylinder-Einheiten (5) freischaltbar ist, um der Konverterbewegung kraftlos zu folgen.

2. Drehmomentabstützung nach Anspruch 1,
**dadurch gekennzeichnet,**
**dass** die Kolben-Zylinder-Einheiten (5) auf Gleichlauf einstellbar sind.

3. Drehmomentabstützung nach einem der vorstehenden Ansprüche,
**dadurch gekennzeichnet,**
**dass** die Kolben-Zylinder-Einheiten (5) zur aktiven oder passiven Schwingungsdämpfung beim Blasen des Konverters ansteuerbar oder blockierbar sind.

4. Drehmomentabstützung nach einem der vorstehenden Ansprüche,
**dadurch gekennzeichnet,**
**dass** die Kolben-Zylinder-Einheiten (5) einzeln ansteuerbar sind.

## Claims

1. Torque support for a converter tilting drive mounted on a shaft pin, wherein supports for support on the structure (6) carrying the converter are provided at the transmission housing (1) receiving the shaft pin to be driven, and the supports are each in themselves pivotably anchored to the structure (6) and are respectively constructed as double-acting hydraulic piston-cylinder units (5), **characterised in that** at least one of the piston-cylinder units (5) is disconnectible so as to follow the converter movement without force.

2. Torque support according to claim 1, **characterised in that** the piston-cylinder units (5) are adjustable in synchronism.

3. Torque support according to one of the preceding claims, **characterised in that** the piston-cylinder units (5) can be activated or locked for active or passive oscillation damping during blowing of the converter.

4. 3. Torque support according to any one of the preceding claims, **characterised in that** the piston-cylinder units (5) are individually activatable.

## Revendications

1. Support de couple pour une commande du basculement du convertisseur chevauchant un tourillon d'arbre, dans lequel on prévoit, sur le carter de protection des engrenages (1) dans lequel vient se loger le tourillon d'arbre à entraîner, des supports à des fins de support sur la structure (6) portant le convertisseur, les supports étant ancrés en articulation à la structure (6) respectivement en soi et étant respectivement réalisés sous la forme d'unités hydrauliques du type à piston-cylindre (5) à double action, **caractérisé en ce qu'**au moins une des unités du type à piston-cylindre (5) peut être déconnectée pour suivre le mouvement du convertisseur sans force.

2. Support de couple selon la revendication 1, **caractérisé en ce que** les unités du type à piston-cylindre (5) peuvent être réglées de manière synchrone.

3. Support de couple selon l'une quelconque des revendications précédentes, **caractérisé en ce que** les unités du type à piston-cylindre (5) peuvent être excitées ou bloquées pour l'amortissement actif ou passif des vibrations lors du soufflage du convertisseur.

4. Support de couple selon l'une quelconque des revendications précédentes, **caractérisé en ce que** les unités du type à piston-cylindre (5) peuvent être excitées de manière individuelle.
